# EUROPEAN PATENT SPECIFICATION

(11) **EP 2 379 791 B1**
(45) Date of publication and mention of the grant of the patent: **28.11.2012**
(21) Application number: 09775158.0
(22) Date of filing: 09.12.2009
(51) Int. Cl.: D06F 39/00, F16F 7/12

(54) **A WASHING MACHINE HAVING TRANSPORT SUPPORT EQUIPMENT**
WASCHMASCHINE MIT TRANSPORTHILFE
LAVE-LINGE COMPRENANT UN ÉQUIPEMENT DE SUPPORT DE TRANSPORT

(30) Priority: 30.12.2008 TR 200810012
(43) Date of publication of application: 26.10.2011
(73) Proprietor: Arçelik Anonim Sirketi, 34950 Istanbul (TR)
(72) Inventor: BAYHAN, Ismet, 34950 Istanbul (TR)
(86) International application number: PCT/EP2009/066681
(87) International publication number: WO 2010/076134

(56) References cited:
- WO-A1-2005/066408

## Description

The present invention relates to a washing machine which is prevented from being damaged during transportation by means of transport support equipment.

In washing machines or washing machines with drying function, the drive group composed of oscillating parts such as the electric motor, the drum and the tub is connected to the body by elements like springs, shock absorbers etc which dampen the movements so that the movements during the steps of washing and spinning are not transferred to the external body. The oscillatory motion of the drive group becomes a problem during transportation therefore transport support equipments are used for securing the oscillating parts to the body during transport and preventing collisions during transport thereby providing a safe transport process. Support equipments are used for temporarily securing mostly the drive group, for example the tub, to the body for transport safety and moreover polystyrene materials named Styrofoam are placed between the washing machine and the packaging for protecting against exterior impacts and providing heat insulation. The wall thickness of the available Styrofoam and relatively the depth of the washing machine packaging should be increased so that the washing machine is not damaged due to the collisions and falls that may occur during transport thereby creating accommodation problems in the transport vehicle as a result of increasing the dimensions of the package.

In the conventional technique, the head portion of the connection bolt, the main element of the support equipment which connects the body with the tub is open to impacts on the outside of the body and in the case of any collision or fall, the impact on the bolt head is directly transferred to the tub, whereto components with high inertia such as the counter balance weight are connected, resulting in the breakage of the tub embossment whereto the bolt is connected

In the state of the art International patent application no W02005066408, a washer/dryer is explained wherein a fixing mechanism is utilized to prevent damages as a consequence of unexpected loads applied upon the washer/dryer during transportation when, for example, the transport vehicle suddenly stops, the item falls down or hits something.

The aim of the present invention is the realization of a washing machine whereof the probable damages during transportation are prevented by means of a support equipment which dampens the external impacts.

The washing machine realized in order to attain the aim of the present invention is explicated in the claims.

The washing machine of the present invention comprises a transport support equipment which is inserted through a connection hole arranged on the rear wall of the body and bolted onto the tub in the horizontal assembly axis direction, with the bolt head left out of the body and a bumper connected to the body in the same axis as the support equipment, which surrounds to safeguard the bolt head projecting out from the body and leaving the body.

In an embodiment of the present invention, the bumper comprises a hollow, cylindrical wall and an opening at the center of the wall providing easy access to the bolt head on the support equipment during mounting, dismounting of the support equipment.

In another embodiment of the present invention, the bumper comprises a base that is seated on the exterior of the body, around the connection hole, surrounded by the cylindrical side wall and an assembly hole arranged on the base, from the center of which the support equipment bolt passes through.

In another embodiment of the present invention, the bumper is configured like a conical bowl having a wall that extends slantingly outwards from the body in the radial direction so that it moves away from the assembly axis.

In another embodiment of the present invention, the bumper has a wall support on the outside of the wall, surrounding the bolt head around the assembly axis and bending outwards and backwards from the front side of the wall thereby extending towards the body.

In another embodiment of the present invention, the bumper comprises ribs arranged all around between the wall and the wall support in the radial direction.

In another embodiment of the present invention, the walls of the bumper are configured in a wavy or zigzag shape.

In another embodiment of the present invention, the bumper comprises a sleeve having a hollow, cylindrical shape, which extends outward from the assembly hole at its center, surrounding the body of the bolt thereby strengthening the connection of the bumper.

In the washing machine of the present invention, since the bolt head in the support equipment is protected all around by the bumper, the impact that may affect the bolt head in any collision or fall, first affects the bumper and is dampened by the bumper until reaching the bolt head, thereby preventing the collision force from reaching the tub in a probable moment of collision or fall during transportation

The washing machine realized in order to attain the aim of the present invention is illustrated in the attached figures, where:

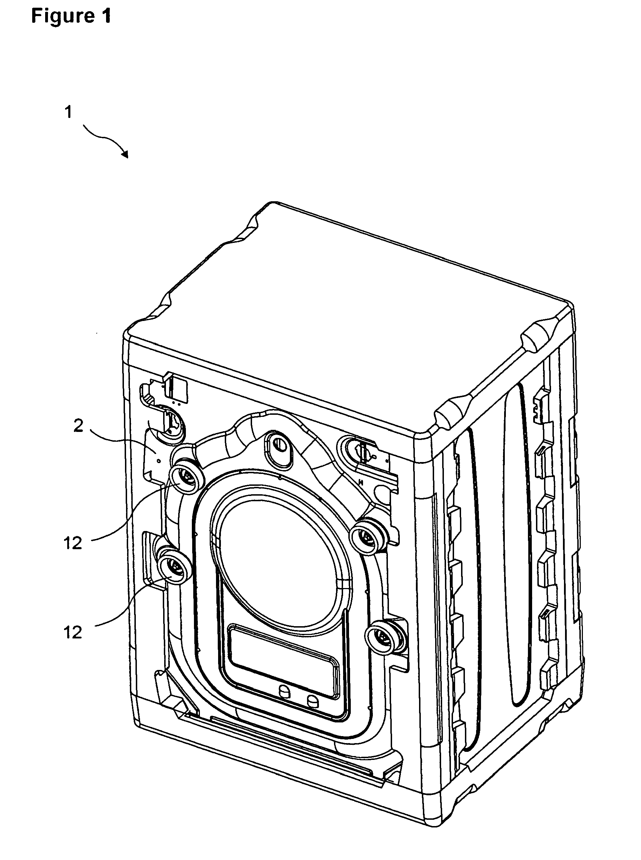

Figure 1 - is the rear side perspective view of a washing machine.

Figure 2 - is the perspective view of a support equipment and a bumper mounted to the support equipment.

Figure 3 - is the exploded view of a support equipment and a bumper.

Figure 4 - is the cross-sectional view of a support equipment, a bumper, a washing machine body and a tub before the assembly.

Figure 5 - is the cross-sectional view of a support equipment and a bumper in the wavy shape.

Figure 6 - is the cross-sectional view of a support equipment and a bumper in the zigzag shape.

Figure 7 - is the cross-sectional view of a support equipment, a bumper, a washing machine body and a tub after the assembly.

Figure 8 - is the perspective view of the bumper in Figure 7.

Figure 9 - is the perspective view of the bumper in Figure 7 from another angle.

Figure 10 - is the cross-sectional view of a support equipment, a bumper, a washing machine body and a tub after the assembly in another embodiment of the present invention.

Figure 11 - is the perspective view of the bumper in Figure 10.

Figure 12 - is the perspective view of the bumper in Figure 10 from another angle.

The elements illustrated in the figures are numbered as follows:
1. Washing machine
2. Body
3. Tub
4. Support equipment
5. Bolt
6. Bolt head
7. Bush
8. Elastic adaptor
9. Sealing element
10. Wall
11. Opening
12. Bumper
13. Base
14. Assembly hole
15. Wall support
16. Rib
17. Connection hole
18. Sleeve

The washing machine (1) comprises a body (2), a drum wherein the laundry is emplaced, a tub (3) wherein the drum moves, a connection hole (17) arranged on the body (2), preferably on the rear wall of the body (2) and a support equipment (4) inserted through the connection hole (17), bolted to the body (2) and the tub (3), thereby preventing the tub (3) from colliding with the body (2) during transportation.

The support equipment (4) comprises a bolt (5) inserted through the connection hole (17) and bolted on the tub (3), a bolt head (6) mounting the bolt (5) by rotating and remaining outside the washing machine (1) body (2) at the end of the assembly process, one or more bushes (7) fitted on the bolt (5) body, having a cylindrical shape, protecting the distance between the body (2) and the tub (3) in the axial direction during the assembly of the support equipment (4), an elastic adaptor (8) mounted to the connection hole (17) for dampening the forces transferred from the bolt (5) to the body (2) and an elastic sealing element (9) situated between the bush (7) and the tub (3) which dampens the forces transmitted from the bolt (5) to the tub (3).

The washing machine (1) of the present invention comprises a bumper (12) which is connected to the body (2) together with the support equipment (4), in the same axis, surrounding and safeguarding the bolt head (6) extending outwards from the body (2) and remaining outside of the body (2).

In the case of a collision or overturning during transportation, damage may be caused since the forces created as a result of an impact on the bolt head (6) are transferred to the tub (3) by using the support equipment (4) as a transfer path, the bumper (12) of the present invention prevents the probable damages of the tub (3) in overturning and collisions during the transportation of the washing machine (1) by protecting the bolt head (6) projecting outside of the body (2) against exterior impacts.

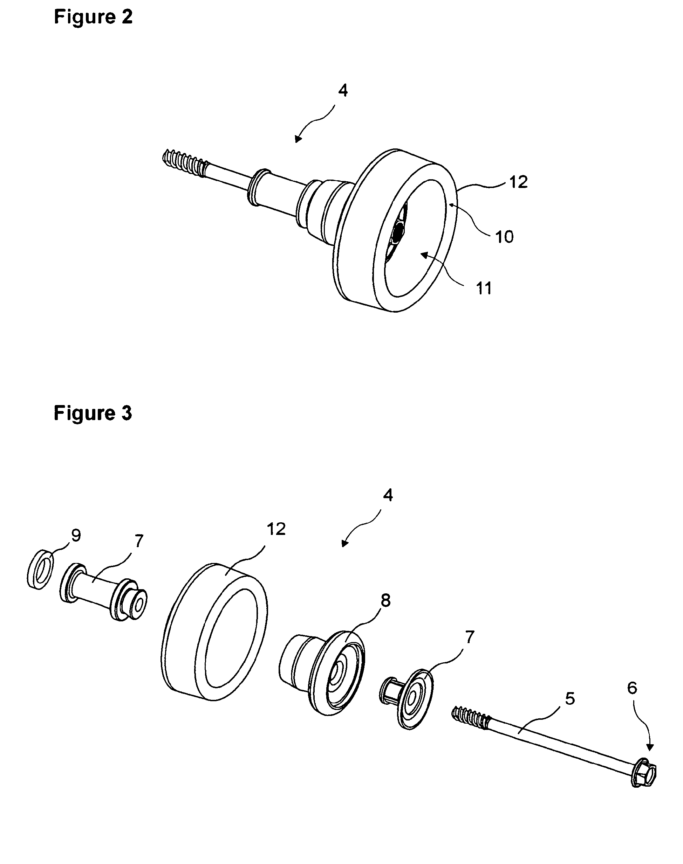

In an embodiment of the present invention, the bumper (12) comprises a hollow, cylindrical shaped wall (10) that surrounds the bolt head (6) and an opening (11) at the center of the wall (10) providing access to the bolt head (6) (Figures 2, 3).

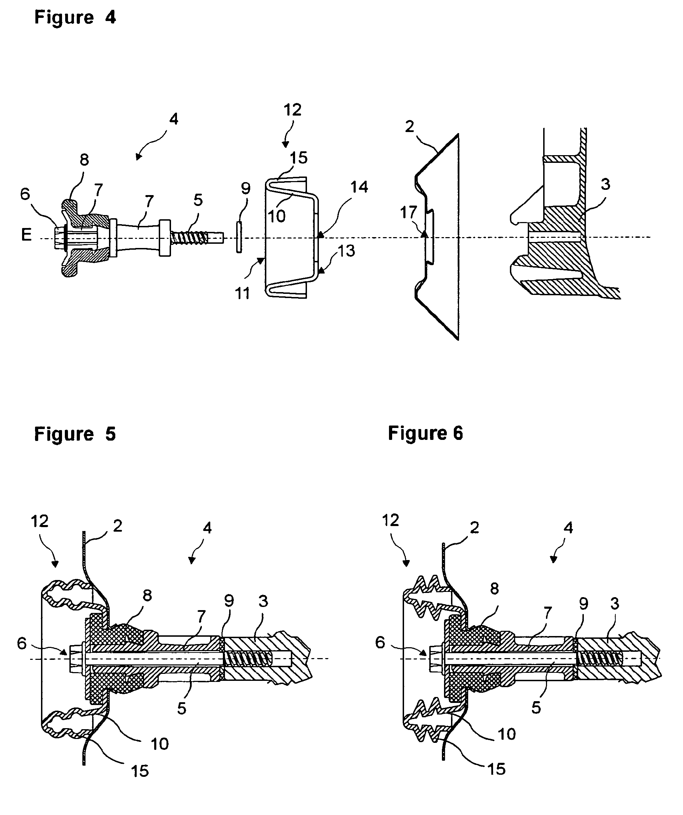

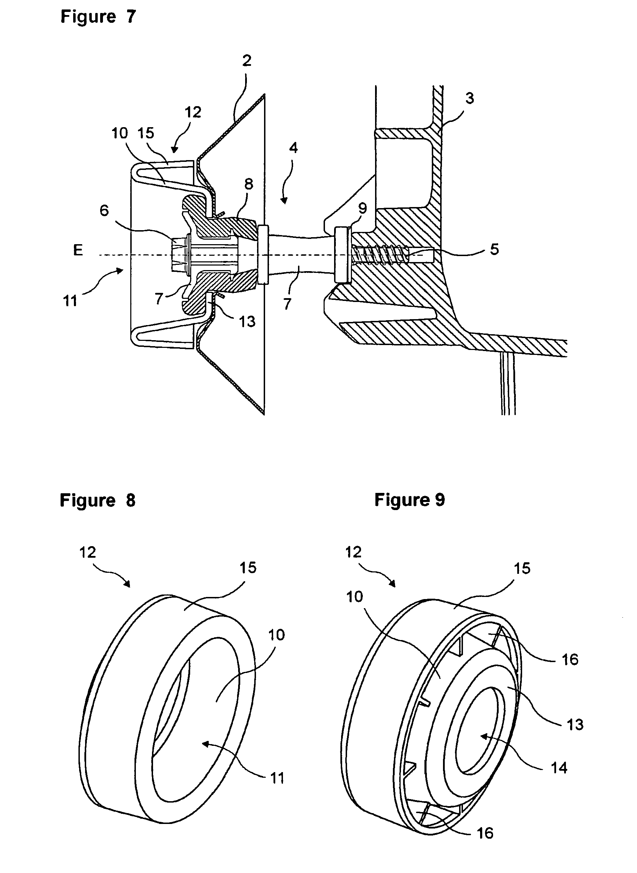

In another embodiment of the present invention, the bumper (12) comprises a base (13) surrounded by the wall (10), seated outside the body (2), around the connection hole (17) and an assembly hole (14) arranged on the base (13), overlapping with the connection hole (17) and from the center of which the bolt (5) passes through (Figures 4, 9).

While the support equipment (4) is mounted, the elastic adaptor (8) is placed in the connection hole (17) after the bumper (12) is placed around the connection hole (17) by means of the assembly hole (14) on its base (13), and thereafter the base (13) is compressed between the elastic adaptor (8) and the body (2) when the bolt (5) is tightened and thereby the bumper (12) is secured on the body (2) together with the support equipment (4) (Figure 7).

In another embodiment of the present invention, the bumper (12) is configured as a conical bowl and the wall (10) extends slantingly outward from the body (2) in the radial direction so as to move away from the horizontal axis (Figures 4, 7 and 10). Consequently, resistance against impacts particularly in the slanted direction is maintained in case the washing machine (1) overturns during transportation.

In another embodiment of the present invention, the bumper (12) comprises a wall support (15) that surrounds the wall (10) and extends towards the body (2) by folding backwards from the wall (10). The wall support (15) increases the impact dampening capability of the bumper (12) in particularly impacts in the slanted direction.

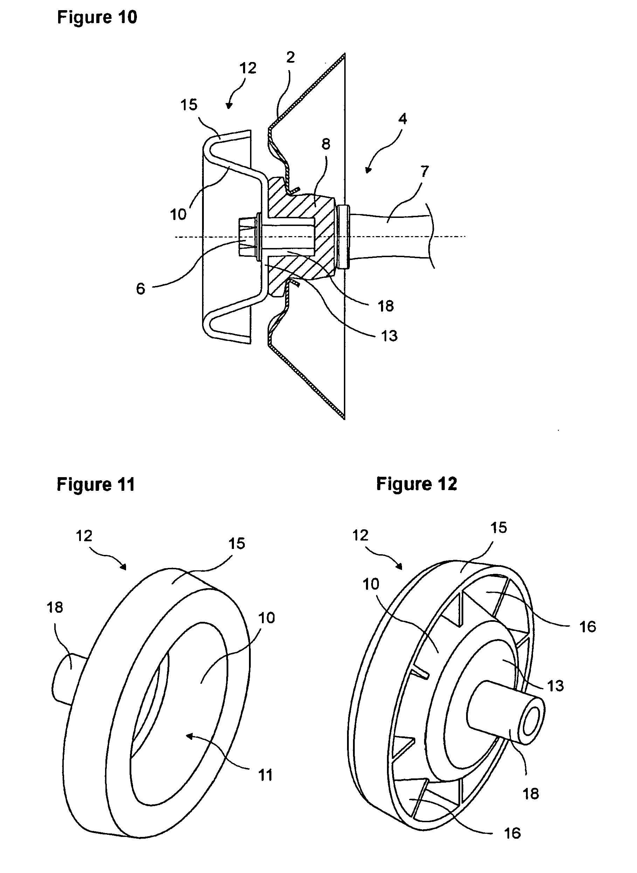

In another embodiment of the present invention, the bumper (12) comprises more than one rib (16) arranged all around in the radial direction between the wall (10) and the wall support (15) for strengthening the bumper (12) (Figures 9, 12).

In another embodiment of the present invention, the wall (10) and the wall support (15) are configured in wavy or zigzag shapes thereby the capability of the bumper (12) for dampening the impacts is increased (Figures 5, 6).

In another embodiment of the present invention, the bumper (12) comprises a sleeve (18) with a hollow, cylindrical shape, extending outwards from the assembly hole (14) at its center and which surrounds the body of the bolt (5), (Figures 10, 11, and 12).

In this embodiment, when the adaptor (12) is mounted together with the support equipment (4), the sleeve (18) wraps around the body of the bolt (5) thus strengthening the connection of the adaptor (12), and furthermore since it functions like a bush (7), a single bush (7) is used instead of two separate bushes (7) thereby decreasing the number of parts (Figure 10).

In this embodiment, while the support equipment (4) is mounted, first the elastic adaptor (8) is placed around the connection hole (17) and the bumper (12) is mounted after the elastic adaptor (8) such that the assembly hole (14) remains in front of the elastic adaptor (8). Afterwards, when the bolt (5) is tightened, the base (13) is compressed between the bolt head (6) and the elastic adaptor (8) and thus the bumper (12) is secured on the body (2) together with the support equipment (4). In this embodiment, moreover, since a second bush (7) is not used, the bolt head (6) is closer to the body (2) with respect to the previous embodiments of the present invention, thus increasing the dampening distance between the bolt head (6) and the point whereto the bumper (12) extends.

In the washing machine (1) of the present invention, the support equipment (4) prevents the tub (3) from hitting the body (2) as in the conventional technique and moreover since the bolt head (6) in the support equipment (4) is protected all around by the bumper (12), the impact that can affect the bolt head (6) in the case of any collision or fall, first affects the bumper (12) and is dampened by the bumper (12) until reaching the bolt head (6), the impact force is prevented from reaching the tub (3), instead to be dispersed over the body (2). The bumper (12) furthermore can be easily mounted to the body (2) together with the support equipment (4) by means of the opening (11) at its center and the assembly hole (14).

It is to be understood that the present invention is not limited by the embodiments disclosed above and a person skilled in the art can easily introduce different embodiments. These should be considered within the scope of the protection postulated by the claims of the present invention.

## Claims

1. A washing machine (1) that comprises a body (2), a drum wherein the laundry is emplaced, a tub (3) wherein the drum moves, a connection hole (17) arranged on the body (2) and a support equipment (4) inserted through the connection hole (17), bolted to the tub (3) in the horizontal assembly axis (E), thereby preventing the tub (3) from colliding with the body (2) during transportation, having a bolt (5) inserted through the connection hole (17) and bolted on the tub (3), a bolt head (6) mounting the bolt (5) by rotating and remaining outside the body (2) at the end of the assembly process, and **characterized by** a bumper (12) which is connected to the body (2) together with the support equipment (4), in the same axis, extending outwards from the body (2) and surrounding and protecting the bolt head (6) remaining outside of the body (2).

2. A washing machine (1) as in Claim 1, **characterized by** the bumper (12) having a hollow, cylindrical shaped wall (10) that surrounds the bolt head (6) and an opening (11) arranged at the center of the wall (10) providing access to the bolt head (6).

3. A washing machine (1) as in Claim 1 or 2, **characterized by** the bumper (12) seated outside the body (2) around the connection hole (17) and having a base (13) surrounded by the wall (10) and an assembly hole (14) arranged on the base (13), overlapping with the connection hole (17) and from the center of which the bolt (5) passes through.

4. A washing machine (1) as in any one of the above Claims, **characterized by** the bumper (12) configured as a conical bowl and having a wall (10) that extends slantingly outwards from the body (2) in the radial direction so as to move away from the assembly axis.

5. A washing machine (1) as in any one of the above Claims, **characterized by** the bumper (12) having a wall support (15) that surrounds the wall (10) and extends towards the body (2) by folding backwards from the wall (10).

6. A washing machine (1) as in Claim 5, **characterized by** the bumper (12) having more than one rib (16) arranged all around between the wall (10) and the wall support (15) in the radial direction.

7. A washing machine (1) as in Claim 5 or 6, **characterized by** the bumper (12) having a wall (10) and a wall support (15) configured in wavy or zigzag shapes.

8. A washing machine (1) as in any one of the above Claims, **characterized by** the bumper (12) having a sleeve (18) with a hollow, cylindrical shape, surrounding around the body of the bolt (5), that extends outwards from the assembly hole (14) at its center.

## Patentansprüche

1. Waschmaschine (1), umfassend einen Gehäusekörper (2), eine Trommel, in die die Wäsche gelegt wird, einen Waschbehälter (3), in dem sich die Trommel bewegt, eine Verbindungsöffnung (17), die am Gehäusekörper (2) vorgesehen ist, und eine Stützeinrichtung (4), die durch die Verbindungsöffnung (17) eingeführt wird, an der horizontalen Montageachse (E) mit dem Waschbehälter (3) verschraubt wird und dadurch verhindert, dass der Waschbehälter (3) während des Transports gegen den Gehäusekörper (2) stößt, aufweisend einen Bolzen (5), der durch die Verbindungsöffnung (17) geführt und am Waschbehälter (3) verschraubt wird, einen Bolzenkopf (6), der den Bolzen (5) durch Drehen anbringt und am Ende des Montagevorgangs außerhalb des Gehäusekörpers (2) verbleibt,
und **gekennzeichnet durch** einen Stoßdämpfer (12), der zusammen mit der Stützeinrichtung (4) auf derselben Achse mit dem Gehäusekörper (2) verbunden ist und sich vom Gehäusekörper (2) nach außen erstreckt und den Bolzenkopf (6), der außerhalb des Gehäusekörpers (2) verbleibt, umgibt und schützt.

2. Waschmaschine (1) nach Anspruch 1, **dadurch gekennzeichnet, dass** der Stoßdämpfer (12) eine hohle zylinderförmige Wand (10) aufweist, die den Bolzenkopf (6) umgibt, und eine Öffnung (11), die in der Mitte der Wand (10) angeordnet ist und Zugriff auf den Bolzenkopf (6) bietet.

3. Waschmaschine (1) nach Anspruch 1 oder 2, **dadurch gekennzeichnet, dass** der Stoßdämpfer (12) außerhalb des Gehäusekörpers (2) um die Verbindungsöffnung (17) herum angeordnet ist und eine Basis (13) aufweist, die von der Wand (10) umgeben ist, und eine Montageöffnung (14), die an der Basis (13) angeordnet ist und die Verbindungsöffnung (17) überlagert und von deren Mitte aus der Bolzen (5) hindurchtritt.

4. Waschmaschine (1) nach einem der vorangehenden Ansprüche, **dadurch gekennzeichnet, dass** der Stoßdämpfer (12) als konische Schale konfiguriert ist und eine Wand (10) aufweist, die sich schräg vom Gehäusekörper (2) in radialer Richtung nach außen und auf diese Weise von der Montageachse fort erstreckt.

5. Waschmaschine (1) nach einem der vorangehenden Ansprüche, **dadurch gekennzeichnet, dass** der Stoßdämpfer (12) eine Wandstütze (15) aufweist, die die Wand (10) umgibt und sich zum Gehäusekörper (2) hin erstreckt, indem sie von der Wand (10) zurückgefaltet ist.

6. Waschmaschine (1) nach Anspruch 5, **dadurch gekennzeichnet, dass** der Stoßdämpfer (12) mehr als eine Rippe (16) aufweist, die in radialer Richtung rundherum zwischen der Wand (10) und der Wandstütze (15) angeordnet sind.

7. Waschmaschine (1) nach Anspruch 5 oder 6, **dadurch gekennzeichnet, dass** der Stoßdämpfer (12) eine Wand (10) und eine Wandstütze (15) aufweist, die wellen- oder zickzackförmig konfiguriert sind.

8. Waschmaschine (1) nach einem der vorangehenden Ansprüche, **dadurch gekennzeichnet, dass** der Stoßdämpfer (12) eine Hülse (18) mit einer hohlen zylindrischen Form aufweist, die den Körper des Bolzens (5) umgibt und sich von der Montageöffnung (14) in ihrer Mitte nach außen erstreckt.

## Revendications

1. Une machine à laver (1) qui comprend un corps (2), un tambour dans lequel le linge est placé, une cuve (3) dans laquelle le tambour se déplace, un trou de raccordement (17) formé sur le corps (2) et un équipement de support (4) inséré à travers le trou de raccordement (17), boulonné à la cuve (3) dans l'axe d'assemblage horizontal (E), ainsi empêchant la cuve (3) d'entrer en collision avec le corps (2) pendant le transport, ayant un boulon (5) inséré à travers le trou de raccordement (17) et boulonné à la cuve (3), une tête de boulon (6) qui est tournée à monter le boulon (5) et qui reste à l'extérieur du corps (2) à la fin du processus d'assemblage,
et **caractérisée par** un pare-chocs (12) qui est relié au corps (2) avec l'équipement de support (4), dans le même axe, s'étendant vers l'extérieur du corps (2) et entourant et protégeant la tête de boulon (6) qui reste à l'extérieur du corps (2).

2. Une machine à laver (1) selon la Revendication 1, **caractérisée par** le pare-chocs (12) ayant une paroi cylindrique creuse (10) qui entoure la tête de boulon (6) et une ouverture (11) formée au centre de la paroi (10) donnant accès à la tête de boulon (6).

3. Une machine à laver (1) selon la Revendication 1 ou 2, **caractérisée par** le pare-chocs (12) placé à l'extérieur du corps (2) autour du trou de raccordement (17) et une base (13) entourée par la paroi (10) et un trou d'assemblage (14) formé sur la base (13), se chevauchant avec le trou de raccordement (17) et à travers du centre duquel le boulon (5) passe.

4. Une machine à laver (1) selon l'une quelconque des revendications précédentes, **caractérisée par** le pare-chocs (12) formé sous la forme d'un bol conique et ayant une paroi (10) qui s'étend obliquement vers l'extérieur du corps (2) dans la direction radiale de manière à s'éloigner de l'axe d'assemblage.

5. Une machine à laver (1) selon l'une quelconque des revendications précédentes, **caractérisée par** le pare-chocs (12) ayant une paroi de support (15) qui entoure la paroi (10) et s'étend vers le corps (2) en étant pliée vers l'arrière à partir de la paroi (10).

6. Une machine à laver (1) selon la Revendication 5, **caractérisée par** le pare-chocs (12) ayant plus d'une nervure (16) formée tout autour entre la paroi (10) et la paroi de support (15) dans la direction radiale.

7. Une machine à laver (1) selon la Revendication 5 ou 6, **caractérisée par** le pare-chocs (12) ayant une paroi (10) et une paroi de support (15) formées en forme ondulée ou en zigzag.

8. Une machine à laver (1) selon l'une quelconque des revendications précédentes, **caractérisée par** le pare-chocs (12) ayant une chemise (18) cylindrique creuse, qui entoure le corps du boulon (5), qui s'étend vers l'extérieur à partir du trou d'assemblage (14) à son centre.
